# EUROPEAN PATENT APPLICATION

(11) **EP 1 736 328 A1**
(43) Date of publication of application: **27.12.2006**
(21) Application number: 06075538.6
(22) Date of filing: 07.03.2006
(51) Int. Cl.: B60C 23/04

(54) **Tyre valve unit for a vehicle**

(30) Priority: 22.06.2005 JP 2005181521; 09.11.2005 JP 2005324637; 27.01.2006 JP 2006019054
(71) Applicant: Pacific Industrial Co., Ltd., Ogaki-shi, Gifu-ken 503-8603 (JP)
(72) Inventor: Katou, Michiya, Ogashi-shi Gifu-ken 503-8603 (JP); Ibuka, Takashi, Ogashi-shi Gifu-ken 503-8603 (JP)
(74) Representative: Marshall, John Grahame

(57) **Abstract**

A tyre valve unit (U) having a tyre valve (1) and a tyre sensor (2) is mounted on a wheel rim (R). In the tyre valve unit, a rigid annular member (collar 30) is secured to an open end of the resilient cylindrical member (20). A housing (40) has an extended portion (42) with a passage (40a) defined therein. The extended portion is engaged with the rigid annular member in the resilient cylindrical member, such that an annular space (S1) is defined between a first engaging portion (21) and a second engaging portion (22).
The annular space communicates with outside of the housing through the passage of the extended portion, and introduces air pressure into the annular space, to press the resilient cylindrical member to the rim.

## Description

### BACKGROUND OF THE INVENTION

The present invention relates to a tyre valve unit for use in an apparatus for monitoring tyre conditions, and more particularly to a tyre valve unit having a structure adapted to be appropriately mounted on a wheel rim of a vehicle.

Heretofore, it is known that a tyre condition monitoring apparatus can monitor tyre conditions, and various tyre valve units for use in those apparatuses have been proposed. In general, the tyre valve unit is provided with a rigid cylindrical member extending from a valve body, a tyre valve having a valve stem of a metallic tube, for example, a resilient cylindrical member made of rubber, for example, for surrounding the valve stem, and a tyre sensor such as a tyre pressure sensor installed on the resilient cylindrical member, and the tyre valve unit is mounted on a wheel rim through the resilient cylindrical member.

For example, in Japanese Patent Laid-open Publication No.2001-174356, as for a tyre pressure sensor provided with a snap-in tyre valve, it is disclosed that a protruding fitting portion having a bleeding portion is installed in a housing for accommodating a pressure detecting element for detecting the tyre pressure and a radio transmitting device for transmitting information obtained by the pressure detecting element, then, the fitting portion is pressed into the bleeding portion of the snap-in tyre valve made of a resilient member such as rubber or the like, to hold the tyre pressure sensor.

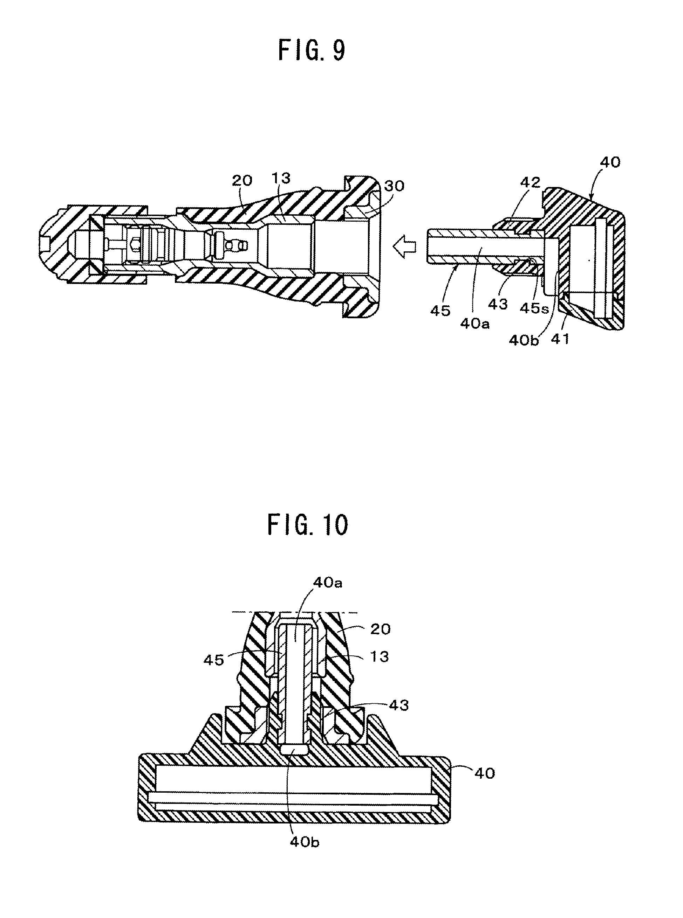

Likewise, in U.S. Patent No.6,005,480, as for a tyre valve that is easily inserted into an opening of a wheel, and that includes a tyre pressure sending unit, proposed is the valve having a load-bearing element such as a tubular column that extends between the sending unit and a resilient valve body. The sending unit and resilient valve body are shaped to form an expansion volume therebetween. The load-bearing element is a rigid body, and is connected with the valve body of the rigid body by a threaded connection or a press fit, to form a rigid structure. According to the unit as shown in FIG.10 of that U.S. Patent, the valve body is partially surrounded by a resilient element, which defines an annular sealing surface, and which is suited for snap-in installation into a wheel rim. The inner end of the valve body defines a conical portion and a groove. The load bearing element for supporting the sending unit carries a clip ring, which is snapped into the groove in the resilient member, to hold the sending unit in the valve body. And, it is described that the expansion volume is created between the sending unit and the inner end of the resilient element.

As to means for securing a pressure sensor on a valve of a "snap-in" type, U.S. Patent No.6,851,308 discloses such a device that comprises a connecting rod fixed at one of its ends to the pressure sensor and at its other end to the valve, and an air passage provided for connecting the valve element of the valve to the pressure sensor. As shown in FIG.1 of that Patent, a valve stem made of rubber has a peripheral groove, which is engaged with a hole of a rim, to constitute the snap-in. And, it is described that a tubular rod whose free end has the shape of a hook is engaged with a frustoconical region formed in an interior passage of the valve stem.

According to the Publications as described above, any one of the tyre valves has a so-called snap-in structure, and means for fitting the valve into the wheel rim through the snap-in structure. With respect to its connection with the tyre pressure transmitting unit or tyre pressure sensor, however, there are problems to be solved, as follows. At the outset, according to the structure for pressing the fitting portion into the bleeding hole as disclosed in Japanese Patent Laid-open Publication No.2001-174356, the tyre valve is easily mounted on it. However, it is difficult to obtain a sufficient connecting force between them.

On the other hand, according to the structure as disclosed in U.S. Patent No.6,005,480, an extremely high dimensional accuracy is required for obtaining a necessary sealing property, when the unit is pressed into the wheel rim. Especially, as the expansion volume for receiving a part of the resilient member during insertion of the tyre valve into the opening of the wheel is apart from the portion connected with the rim, it is doubtful whether such a displacement as required for the snap-in structure can be absorbed by the expansion volume. Also, there is disclosed the structure that the clip ring of the load bearing element is snapped into the groove of the valve body in the resilient member. However, at a portion corresponding to the portion connected with the rim as shown in FIG.10 of United State Patent No.6,005,480, it is very difficult to engage (the clip ring of) the load bearing element with (the groove of) the valve body, so that it is not practical. Furthermore, after the unit is mounted on the rim, it is required to keep an air-tight relationship with the rim, and also required to do with centrifugal force which will be applied to the unit as the rim is rotating. According to the unit with the rigid structure as disclosed in U.S. Patent No.6,005,480, however, its weight is large, and it is likely to be affected by the centrifugal force, so that it is hard to keep the air-tight relationship with the rim. Especially, in the case where the rim is thin, the unit might swing about its portion fixed to the rim, and then vibrate. Therefore, it may be required to provide countermeasures, depending upon gratitude of the centrifugal force to be compensated.

Likewise, according to the structure as shown in FIG.1 of U.S. Patent No.6,851,308, it is difficult to engage the hook-like free end of the rod with the frustoconical region formed in the interior passage of the valve stem, and it is extremely difficult to obtain the sufficient sealing property. Supposing that there is a space which is capable of engaging the hook-like free end of the rod with the frustoconical region easily, the hook-like free end will be engaged with the frustoconical region made of rubber, whereby it might be separated from that region easily instead. Therefore, some countermeasures will be required.

### SUMMARY OF THE INVENTION

Accordingly, exemplary embodiments of the present invention aim to provide a tyre valve unit mounted on a wheel rim for a vehicle, with a structure for holding the unit to be mounted easily on the rim, and maintaining the holding state to ensure a necessary sealing property.

In order to accomplish the above and other objects, the invention provides a tyre valve unit according to claim 1 herein.

In the tyre valve unit of the invention, the extended portion of the housing may include a threaded portion configured to be threaded with the rigid annular member in the resilient cylindrical member. And, a rigid support member may be held at one end thereof by the threaded portion, such that a free end portion of the rigid support member extends from the threaded portion into the resilient cylindrical member. The passage may be defined in the threaded portion and the rigid support member to communicate the annular space with outside of the housing.

Alternatively, the rigid cylindrical member may include a metallic tube, which is integrally accommodated in the housing, and provided to extend from the threaded portion to the free end portion, so that the passage may be defined in the metallic tube.

Alternatively, the extended portion of the housing may include a threaded portion configured to be threaded with the rigid annular member in the resilient cylindrical member, and a rigid support member may be held at one end thereof in the threaded portion, and formed at the other one end of the rigid support member with a flange portion held in the housing, so that the passage may be defined in the threaded portion and the rigid support member. Or, the extended portion may include a rigid support member having a threaded portion configured to be threaded with the rigid annular member in the resilient cylindrical member, and having a free end portion configured to extend from the threaded portion into the resilient cylindrical member, so that the passage may be defined in the rigid support member.

Alternatively, the extended portion of the housing may further include a fork portion configured to be engaged with the rigid annular member in the resilient cylindrical member, and the rim may be held between the first engaging portion and the second engaging portion of the resilient cylindrical member, with the fork portion being engaged with the rigid annular member in the resilient cylindrical member.

### BRIEF DESCRIPTION OF THE DRAWINGS

Various objects and details of the following description of exemplary embodiments will become readily apparent with reference to the accompanying drawings, wherein like reference numerals denote like elements, and in which:
FIG.1 is a vertical cross-sectional view of an exemplary first embodiment of a tyre valve unit according to the invention;
FIG.2 is a side view of the tyre valve unit of FIG. 1 mounted on a wheel rim;
FIG.3 is a vertical cross-sectional view of the tyre valve unit of FIG.1, before assembly of the resilient cylindrical member and the housing;
FIG.4 is a transverse cross-sectional view of a part of the tyre valve unit of FIG.1;
FIG.5 is a front view of the housing of the tyre valve unit of FIG.1;
FIG.6 is a side view of the housing of the tyre valve unit of FIG.1;
FIG.7 is a perspective view of the housing of the tyre valve unit of FIG.1;
FIG.8 is a vertical cross-sectional view of an exemplary second embodiment of a tyre valve unit according to the invention mounted on a wheel rim;
FIG.9 is a vertical cross-sectional view of the tyre valve unit of FIG.8, before assembly of the resilient cylindrical member and the housing;
FIG.10 is a transverse cross-sectional view of a part of the tyre valve unit of FIG.8;
FIG.11 is a vertical cross-sectional view of a third embodiment of a tyre valve unit according to the invention;
FIG.12 is a vertical cross-sectional view of the tyre valve unit of FIG.11, before assembly of the resilient cylindrical member and the housing;
FIG.13 is a transverse cross-sectional view of a part of the tyre valve unit of FIG.11;
FIG.14 is a vertical cross-sectional view of a fourth embodiment of a tyre valve unit according to the invention;
FIG.15 is a vertical cross-sectional view of the tyre valve unit of FIG.14, before assembly of the resilient cylindrical member and the housing;
FIG.16 is a transverse cross-sectional view of a part of the tyre valve unit of FIG.14;
FIG.17 is a vertical cross-sectional view of a fifth embodiment of a tyre valve unit according to the invention mounted on a wheel rim;
FIG.18 is a vertical cross-sectional view of the tyre valve unit of FIG.17, before assembly of the resilient cylindrical member and the housing ;
FIG.19 is a transverse cross-sectional view of a part of the tyre valve unit of FIG. 17;
FIG.20 is a vertical cross-sectional view of an exemplary sixth embodiment of a tyre valve unit according to the invention;
FIG.21 is a vertical cross-sectional view of the tyre valve unit of FIG.20, before assembly of the resilient cylindrical member and the housing;
FIG.22 is a transverse cross-sectional view of a part of the tyre valve unit of FIG.20;
FIG.23 is a front view of the housing of the tyre valve unit of FIG.20;
FIG.24 is a side view of the housing of the tyre valve unit of FIG.20;
FIG.25 is a perspective view of the housing of the tyre valve unit of FIG.20;
FIG.26 is a vertical cross-sectional view of an exemplary seventh embodiment of a tyre valve unit according to the invention mounted on a wheel rim;
FIG.27 is a vertical cross-sectional view of the tyre valve unit of FIG.26, before assembly of the resilient cylindrical member and the housing;
FIG.28 is a transverse cross-sectional view of a part of the tyre valve unit of FIG.26;
FIG.29 is a front view of the housing of the tyre valve unit of FIG.26;
FIG.30 is a side view of the housing of the tyre valve unit of FIG.26; and
FIG.31 is a perspective view of the housing of the tyre valve unit of FIG.26.

### DETAILED DESCRIPTION OF EMBODIMENTS

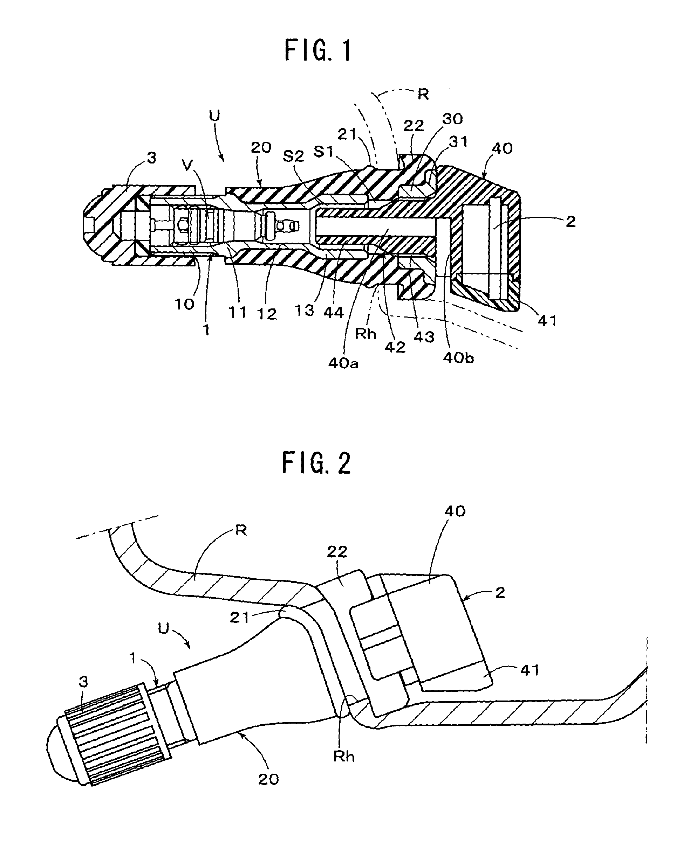

Referring to FIGS.1-7, there is illustrated a tyre valve unit according to an exemplary embodiment, which is used for a tyre condition monitoring apparatus for monitoring tyre conditions such as pneumatic pressure, temperature, or the like, within a vehicle tyre. As shown in FIGS.1 and 2, a tyre valve 1 is connected with a tyre sensor 2 to provide a tyre valve unit U, which is mounted on a rim R for a vehicle wheel, with a resilient cylindrical member 20. As for components of the tyre sensor 2, various electronic parts, a battery, an antenna, and so on, may be included, and a transmitting function may be provided, so that the unit may be classified as a transmitting unit. In the present embodiment, however, the tyre sensor 2 is not limited to the transmitting unit, but corresponds to a sensor unit with at least a function for monitoring the tyre conditions.

As for the tyre valve 1, a valve mechanism (V) is accommodated in a metallic valve body 10, and a valve stem 12 is formed integrally with the valve body 10 to extend therefrom. The valve stem 12 is metallic, or may be made from synthetic resin to provide the rigid cylindrical member. Or, it may be made separately from the valve body 10, and then connected together. The extending end portion of the valve system 12 is enlarged in diameter to form an enlarged diameter portion 13, which is enclosed in the resilient cylindrical member 20 made of rubber, together with an expanded portion 11, which provides a boundary to the valve body 10.

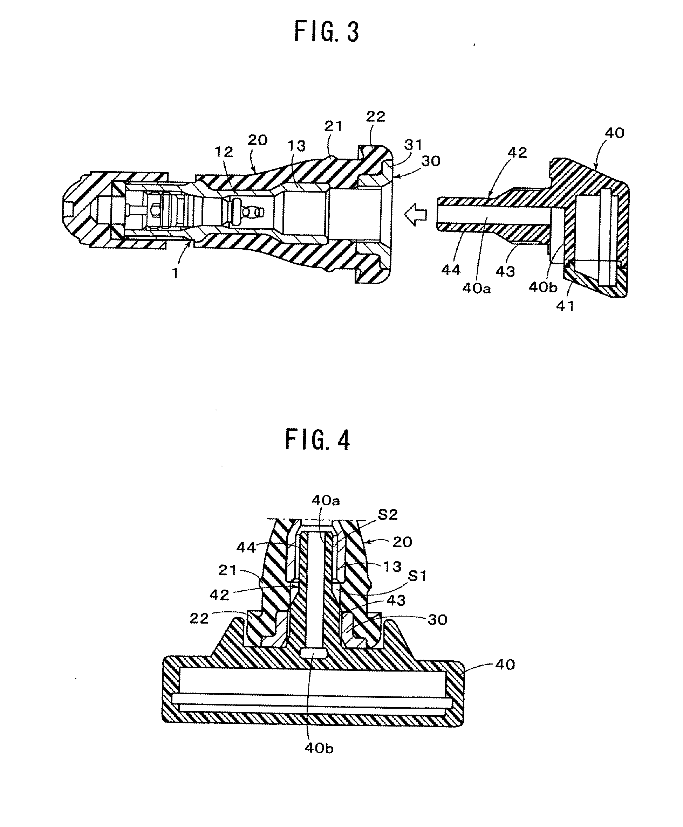

According to the exemplary embodiment as shown in FIGS.1-7, the resilient cylindrical member 20 is a rubber member formed to enclose the valve stem 12, as shown in FIGS.1 and 3, with its outer surface tapered. On the outer surface of the one end of the resilient cylindrical member 20, a first engaging portion 21 is integrally formed therewith to extend in a radial direction thereof, to be engaged with one side of the rim R. And, on the outer surface of the other one end of the resilient cylindrical member 20, a second engaging portion 22 is integrally formed therewith to extend in a radial direction thereof, to be engaged with the other one side of the rim R. The first engaging portion 21 and second engaging portion 22 may be each formed in the shape of an annular protrusion, respectively, or they may be formed, respectively, in such a configuration that a plurality of protrusions are formed in series along its outer circumference, with a plurality of clearances provided along the outer circumference.

Also, as a rigid annular member, a metallic annular collar 30 made of brass, for example, having a flange portion 31, is fitted into one end of the other end portion of the resilient cylindrical member 20, i.e., on the same side thereof as a housing 40. Practically, the collar 30 and the valve stem 12 may be integrally formed together by insert-forming, or vulcanized, to form the resilient cylindrical member 20 made of rubber, as shown in FIG.3.

On the other hand, the housing 40 for the tyre sensor 2 is a case made from synthetic resin, and formed as shown in FIGS.3-7, such that an opening thereof facing the inner surface of the rim R is closed by a lid member 41, after a sensor unit (not shown) is received in the housing 40. The housing 40 is integrally formed with an extended portion 42 to be engaged with the collar 30. And, the extended portion 42 is formed with a threaded portion 43 configured to be threaded with the collar 30, and a free end portion 44, which is provided to extend from the threaded portion 43 into the enlarged diameter portion 13 of the valve stem 12. In the threaded portion 43 and the free end portion 44, a passage 40a is defined to open at the tip end of the free end portion 44, and communicate with a passage 40b, which opens in a lateral direction of the housing 40, at the side of the threaded portion 43.

Accordingly, when the tyre valve unit U is assembled as described later, and mounted on the rim R, it is held on the rim R between the first engaging portion 21 and the second engaging portion 22, in such a state that the threaded portion 43 is threaded with the collar 30 within the resilient cylindrical member 20, as shown in FIG.1. Then, as shown in FIG.1 and FIG.4, an annular space S1 is defined between the inner surface of the resilient cylindrical member 20 and the extended portion 42, at a position that corresponds to the position between the first engaging portion 21 and the second engaging portion 22 of the resilient cylindrical member 20. Also, as the free end portion 44 is held in the enlarged diameter portion 13, a cylindrical space S2 is defined between the inner surface of the enlarged diameter portion 13 and the outer surface of the free end portion 44. Therefore, the annular space S1 and the cylindrical space S2 are communicated with an inner space of the rim R (i.e., right space in FIG.1) through the passages 40a and 40b. In this case, the annular space S1 and cylindrical space S2 may be formed in substantially annular and cylindrical shapes, respectively. For instance, the annular space S1 and cylindrical space S2 may be divided into a plurality of radial spaces by means of longitudinal ribs (not shown), respectively, thereby to be formed in substantially annular and cylindrical shapes.

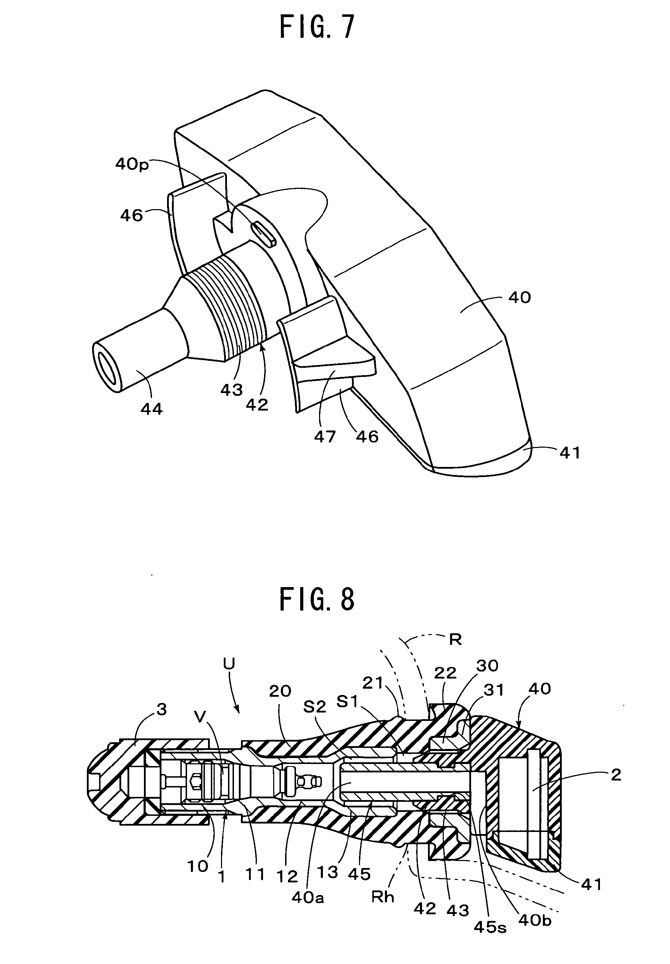

According to the present embodiment, as apparent from the perspective view shown in FIG.7, a pair of lifted wall potions 46 and 46 are formed at opposite lateral sides of the extended portion 42, and integrally formed with ribs 47 and 47, respectively. The lid member 41 has an outer lateral surface approximately in parallel with the inner surface of the rim R, such that a clearance between the lid member 41 and the rim R is set to be of a predetermined value. With the lid member 41 being formed as described above, in the case where centrifugal force is applied to the housing 40 (tyre sensor 2) when the vehicle is running, if deflection is caused in the housing 40, the outer surface of the lid member 41 will be in contact with the inner surface of the rim R, so that the clearance between the lid member 41 and the rim R can be minimized. Therefore, even if the lid member 41 is forced to contact the rim R when the vehicle is running, a stably mounted state can be obtained. With respect to the tyre sensor 2, there are provided at least the function for monitoring the state of the tyre, as described above, and also the transmitting function, which functions are not directly related to the present invention, so that further explanation is omitted herein.

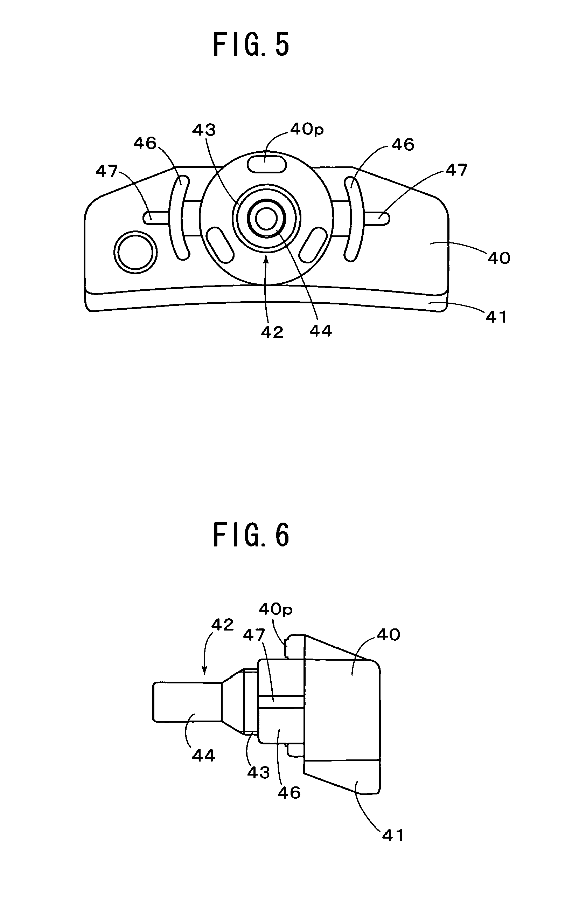

Next will be explained assembling the tyre valve unit U as constituted above and mounting it on the rim R for the vehicle wheel. The housing 40 (tyre sensor 2) as constituted in FIGS.5-7 is inserted into the tyre valve 1 formed integrally with the resilient cylindrical member 20 and the collar 30, as indicated by a blank arrow in FIG.3. Then, with the free end portion 44 being accommodated in the enlarged diameter portion 13 of the valve stem 12, the threaded portion 43 is threaded with the collar 30. Consequently, the housing 40 is held in such a state as being fixed to the collar 30 securely. As a result, the annular space S1 is defined between the inner surface of the resilient cylindrical member 20 and the extended portion 42, and the cylindrical space S2 is defined between the inner surface of the enlarged diameter portion 13 and the outer surface of the free end portion 44, as shown in FIG.4. Therefore, the annular space S1 is communicated with the passages 40a and 40b through the cylindrical space S2.

With the tyre valve 1 and tyre sensor 2 being assembled to be in the state as shown in FIG.1, the tyre valve unit U is formed. Then, one end of the tyre valve unit U at the cap 3's side thereof is passed through the hole Rh of the rim R, and the resilient cylindrical member 20 is pulled toward the cap 3. When the first engaging portion 21 of the resilient cylindrical member 20 gets over the hole Rh of the rim R, the resilient cylindrical member 20 is secured to the rim R, between the first engaging portion 21 and the second engaging portion 22. In this case, as the annular space S1 has been defined between the inner surface of the resilient cylindrical member 20 and the extended portion 42, a portion between the first engaging portion 21 and the second engaging portion 22 will be bent in the radial direction (toward the center of the axis), when the first engaging portion 21 of the resilient cylindrical member 20 gets over the hole Rh of the rim R, whereby the resilient cylindrical member 20 can be easily secured to the rim R. Then, if the resilient cylindrical member 20 is pulled further, the second engaging portion 22 is blocked by the rim R, so that it will not get over the rim R, and therefore the tyre valve unit U will be held in the state secured on the rim R. As a result, the tyre valve unit U is held in such a state that the lid member 41 of the housing 40 is approximately in parallel with the inner surface of the rim R, with a small clearance being provided between them, as shown in FIG.2. In addition, as the collar 30 serving as the rigid annular member has been secured to the open end portion of the housing in the resilient cylindrical member 20, the end portion of the resilient cylindrical member 20 can be prevented from being deformed, to maintain such a state that the tyre valve unit U is mounted on the rim R securely, and obtain a necessary sealing property against the rim R.

Next, with air being fed into the tyre, air pressure, i.e., so-called back pressure, is applied from the inner side of the rim R (right side in FIG.1) to the annular space S1 through the passage 40b, passage 40a and cylindrical space S2, so that the portion between the first engaging portion 21 and the second engaging portion 22 in the resilient cylindrical member 20 is pressed to the open end surface of the rim R. Consequently, the necessary sealing property can be maintained between the resilient cylindrical member 20 and the rim R, and even if the thickness of the rim R is thin, the air-tight relationship between them can be maintained. In addition, as the rim R is rotating, the centrifugal force will be applied to the tyre valve unit U in the radial direction. According to the present embodiment, however, the valve stem 12 serving as the rigid cylindrical member is separated from the housing 40, and these are connected by the resilient cylindrical member 20 to form a flexible structure, so that the centrifugal force can be compensated appropriately. Accordingly, without considering any possibility of the problem raised in the prior unit of the rigid structure, the tyre valve unit U can be secured to the rim R in a stable state. And, as the threaded portion 43 is threaded with the collar 30, the tyre valve 1 and the housing 40 (tyre sensor 2) are held to be in such a state that they are mounted on the rim R securely, and function as the tyre valve unit U in the stable state.

Furthermore, as the rim R rotates at higher speed, larger centrifugal force will be applied to the tyre valve unit U, such that a relative displacement may be created between the enlarged diameter portion 13 of the valve stem 12 and the free end portion 44 of the extended portion 42. With the cylindrical space S2 being formed between those portions, however, the relative displacement between the enlarged diameter portion 13 and the free end portion 44 against the resilient force of the resilient cylindrical member 20 may be allowed. Thus, with the relative displacement created between the enlarged diameter portion 13 and the free end portion 44, the centrifugal force can be compensated appropriately. If a load of more than the force for creating the relative displacement is applied to the tyre valve unit U, the free end portion 44 comes into contact with the inner surface of the enlarged diameter portion 13, to restrict a further relative displacement, so that the function of the tyre valve unit U will not be deteriorated.

FIGS.8-10 show another embodiment of the present invention. In contrast to the aforementioned embodiment, wherein the threaded portion 43 and the free end portion 44 are formed integrally with the housing 40, according to the present embodiment, a metallic tube 45 serving as the rigid support member is held at its one end portion in the threaded portion 43, for supporting a free end portion of the metallic tube 45 to extend into the resilient cylindrical member 20, and into the enlarged diameter portion 13. Instead of the free end portion 44 being made from synthetic resin integrally with the housing 40, the metallic tube 45 is employed to raise its strength. As shown in FIG.8, an annular groove 45s is formed on one end of the metallic tube 45, and the threaded portion 43 is formed to enclose therein a portion of the metallic tube 45 formed with the annular groove 45s (then, the extended portion 42 and the main body of the housing 40 are formed), according to an integrally forming process with resin, so that the metallic tube 45 is secured to the threaded portion 43 firmly. As other elements as shown in FIGS.8-10 are substantially the same as those shown in FIGS.1-7, assembling manners and functions are approximately equal, and like effect can be obtained, explanation of those elements is omitted herein, with the same reference numerals being applied to elements which are substantially the same as those shown in FIGS.1-7.

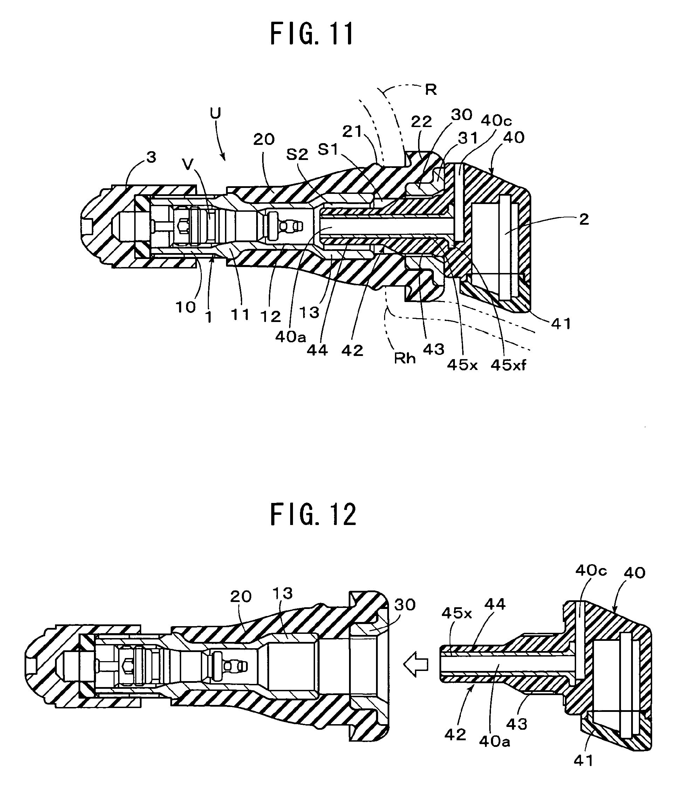

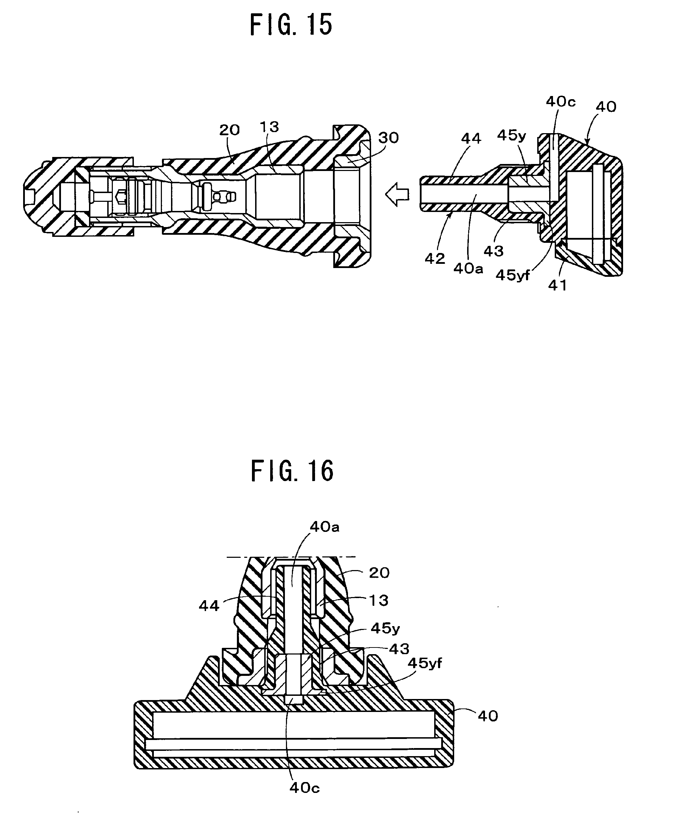

FIGS.11-19 show three exemplary embodiments, which are integrally provided with a metallic tube serving as the rigid support member, respectively, like the embodiment as shown in FIGS.8-10, and which will be explained in sequence hereinafter. As other elements as shown in FIGS.11-19 are substantially the same as those shown in FIGS.1-7, assembling manners and functions are approximately equal, and like effect can be obtained, explanation of those elements is omitted herein, with the same reference numerals being applied to those substantially the same as the elements as shown in FIGS.1-7.

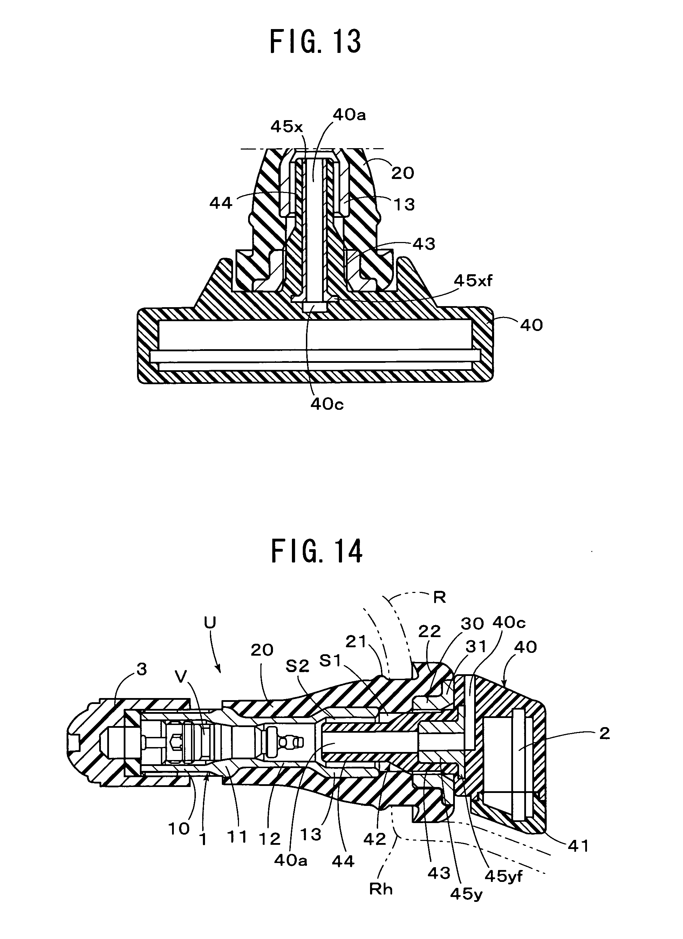

At the outset, according to the embodiment as shown in FIGS.11-13, a metallic tube 45x serving as the rigid support member extends from the threaded portion 43 to the free end portion 44, and enclosed with synthetic resin along the whole longitudinal length of the metallic tube 45x, to be formed integrally with the housing 40. According to the present embodiment, the metallic tube 45x is employed to raise its strength, like the embodiment as shown in FIGS.8-10. In addition, the metallic tube 45x is integrally provided with a flange portion 45xf at its rear end. The extended portion 42 including the threaded portion 43 and free end portion 44, and the main body of the housing 40 are formed by the integrally forming process with synthetic resin, to enclose the metallic tube 45x and flange portion 45xf. Therefore, the metallic tube 45x is securely held in the housing 40, with the passage 40a being formed in the metallic tube 45x. According to the embodiments as shown in FIGS.11-13, a passage 40c opens upward in FIG.11, i.e., in a different direction from the passage 40b as shown in FIGS.8-10, which opens downward. Thus, as the passage 40c and the passage 40b open at different positions, they are indicated by different reference numerals, but they have substantially the same function, in other embodiments described hereinafter with reference to FIGS.14-19, as well.

Then, FIGS.14-16 show the embodiment wherein a metallic tube 45y serving as the rigid support member is held at its front end by the threaded portion 43, and formed at its rear end integrally with a flange portion 45yf. The extended portion 42 including the threaded portion 43 and free end portion 44, and the main body of the housing 40 are formed by the integrally forming process with synthetic resin, to enclose the metallic tube 45y and flange portion 45yf. Therefore, the metallic tube 45y is securely held in the vicinity of the threaded portion 43 in the housing 40. According to the present embodiment, a part of the passage 40a is constituted by the metallic tube 45y, and communicated with the passage 40c through the metallic tube 45y.

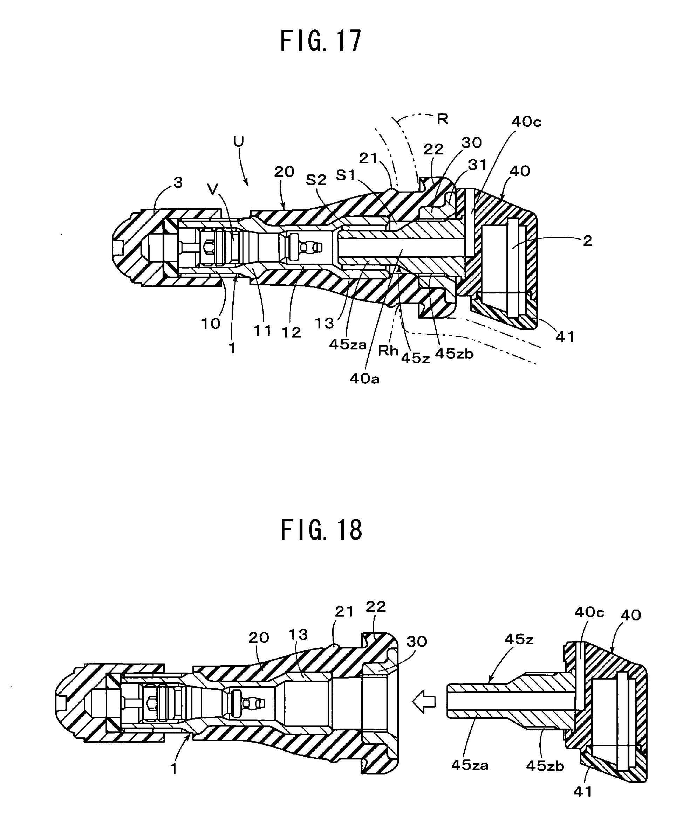

According to the embodiment as shown in FIGS.17-19, a metallic tube 45z serving as the rigid support member is formed at its rear end with a threaded portion 45zb, which is configured to be equal to the threaded portion 43, and formed at its front end with a free end portion 45za, which is configured to be equal to the free end portion 44. The metallic tube 45z is supported by the housing 40, with the free end portion 45za being extended into the resilient cylindrical member 20, and further into the enlarged diameter portion 13. That is, the metallic tube 45z is used to raise its strength furthermore, and the housing 40 is formed by the integrally forming process with synthetic resin, to enclose the rear end portion of the threaded portion 45zb. Therefore, the metallic tube 45z is securely held in the housing 40. Also, with the threaded portion 45zb being engaged with the collar 30, a securely engaged state can be made according to the metallic threaded connection between them.

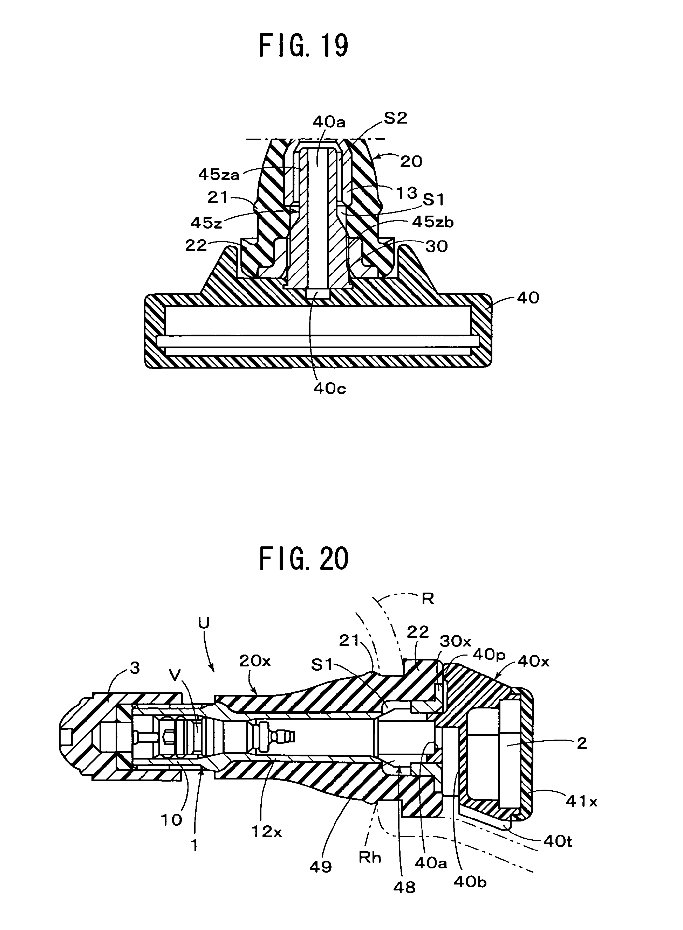

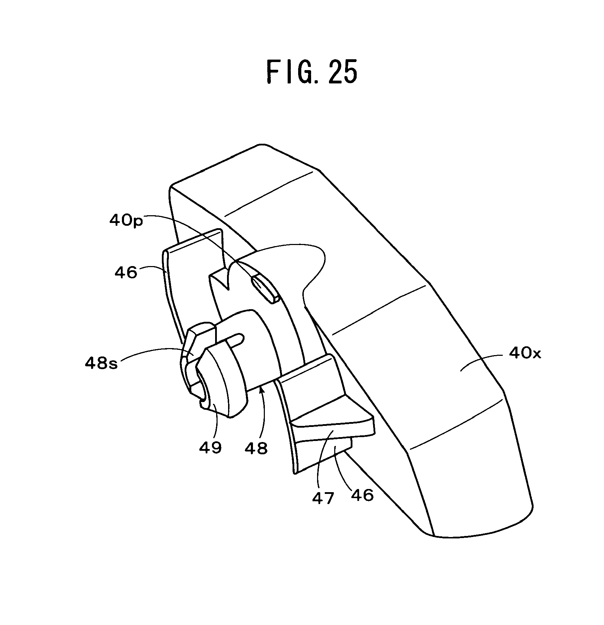

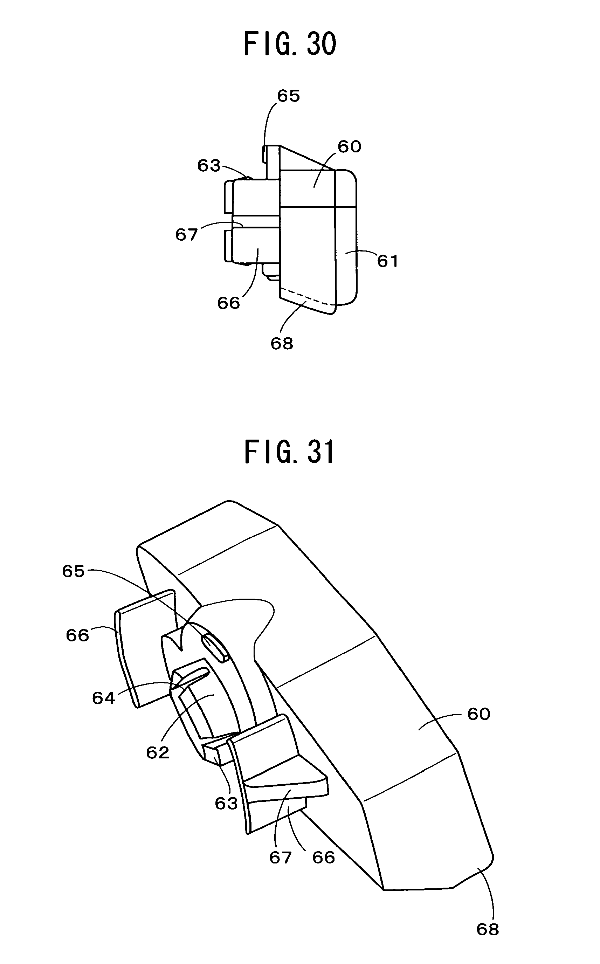

Next, FIGS.20-25 and FIGS.26-31 illustrate other exemplary embodiments, which are different in structure, with respect to the extended portion and the valve stem, and slightly different in connecting structure of the tyre valve 1 and the housing 40 (tyre sensor 2), comparing with the aforementioned embodiments. However, the function of the annular space S1 as defined with other elements assembled to form the tyre valve unit U, is substantially the same as that in the aforementioned embodiments. Therefore, although the valve stem 12, resilient cylindrical member 20, collar 30 and housing 40 are indicated by the reference numerals with "x" added to those as shown in FIGS.1-7, explanation of other elements is omitted herein, with the same reference numerals being applied to those substantially the same as the elements as shown in FIGS.1-7.

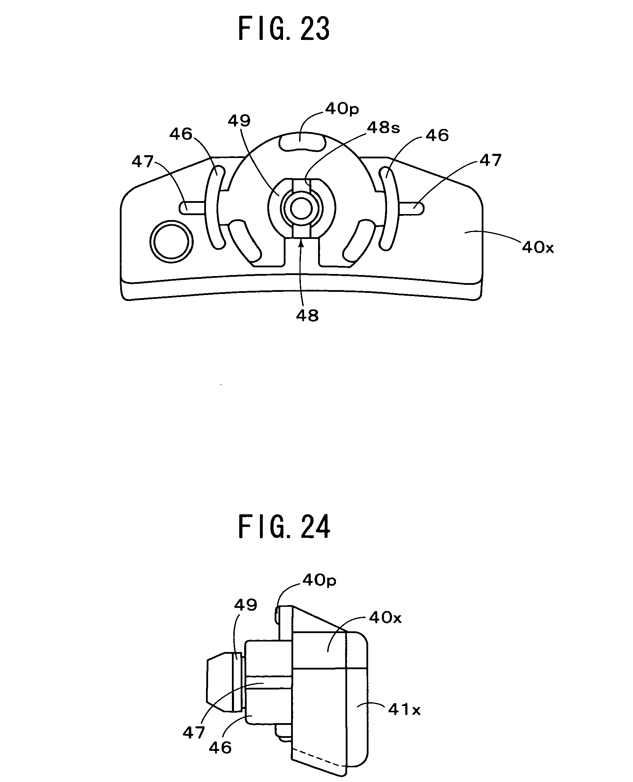

According to the exemplary embodiment as shown in FIGS.20-25, a housing 40x is a case made from synthetic resin, such that its opening end formed in the same direction as the longitudinal axis of the tyre valve 1 is closed by a lid member 41x, after the sensor unit (not shown) of the tyre sensor 2 is received in the hosing 40x. The housing 40x has an extended portion 48 to be engaged with a collar 30x, at its opposite side to the lid member 41x. The extended portion 48 of the present embodiment is integrally formed with the housing 40x, and formed at its tip end with a fork portion 49 to be engaged with the collar 30x. Along the longitudinal axis of the extended portion 48, the fork portion 49 is formed with a plurality of slits 48s (as indicated in FIG.23), to provide a plurality of divided parts. With the elements being assembled to be mounted on the rim R, as described later, the tyre valve unit U is held by the rim R between the first engaging portion 21 and the second engaging portion 22 in the resilient cylindrical member 20, as shown in FIG.20, in such a state that the fork portion 49 is engaged with the collar 30x in the resilient cylindrical member 20x.

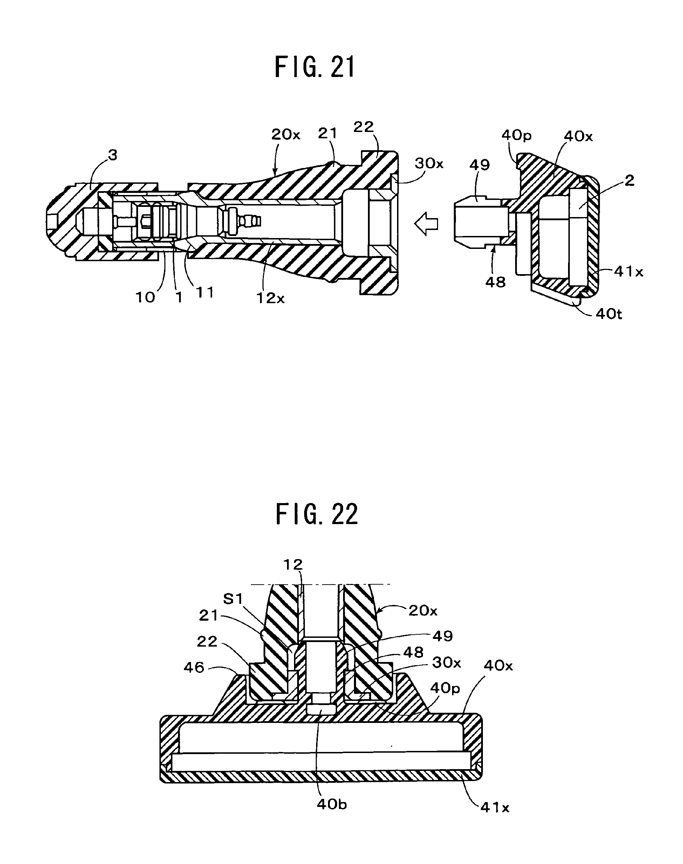

As shown in FIG.22, on the housing 40x, there is formed a protrusion 40p, which is adapted to come into contact with the open end surface of the resilient cylindrical member 20x, when the fork portion 49 is engaged with the collar 30x in the resilient cylindrical member 20x. That is, when the fork portion 49 is engaged with the collar 30x as shown in FIG.20 and FIG.22, the engaged state between the fork portion 49 and the collar 30x is maintained with resilient force created on a contacting portion of the resilient cylindrical member 20x, which is compressed by the protrusion 40p. According to the present embodiment, the annular space S1 is defined between the inner surface of the resilient cylindrical member 20x and the fork portion 49 (extended portion 48) of the housing 40x, at such a position that approximately corresponds to the position between the first engaging portion 21 and the second engaging portion 22 of the resilient cylindrical member 20x, as shown in FIG.20 and FIG.22. This annular space S1 is communicated with outside of the housing 40x through the passages 40a and 40b, as well. And, the annular space S1 may be divided into a plurality of radial spaces to provide substantially the annular shape.

According to the present embodiment, a guide portion 40t is formed on the outer surface of housing 40x, which faces the inner surface of the rim R. The guide portion 40t is formed with the outer surface approximately in parallel with the inner surface of the rim R, to set the clearance between the housing 40x and the rim R to be of a predetermined value. With the guide portion 40t being formed as described above, in the case where the centrifugal force is applied to the housing 40x (tyre sensor 2) when the vehicle is running, if deflection is caused in the housing 40x, the outer surface of the guide portion 40t will be in contact with the inner surface of the rim R, so that the clearance between the guide portion 40t and the rim R can be minimized. Therefore, even if the housing 40x is forced to contact the rim R when the vehicle is running, a stably mounted state can be obtained.

Next will be explained assembling the tyre valve unit U as constituted above and mounting it on the rim R for the vehicle wheel. The housing 40x (tyre sensor 2) as constituted in FIGS.23-25 is inserted into the tyre valve 1 formed integrally with the resilient cylindrical member 20x and the collar 30x, as indicated by a blank arrow in FIG.21, so that the fork portion 49 is engaged with the collar 30x in the resilient cylindrical member 20x. As the extended portion 48 (fork portion 49) is formed with the slits 48s, the fork portion 49 is bent in the radial direction when the fork portion 49 passes through the opening of the collar 30x, so that the fork portion 49 easily gets over the collar 30x, to be engaged with the open end portion thereof, and held in the state as shown in FIG.20 and FIG.22. In this case, the protrusion 40p presses the end surface of the resilient cylindrical member 20x, so that the fork portion 49 is engaged with the collar 30x, with the resilient cylindrical member 20x being compressed. Therefore, the fork portion 49 is held to be securely engaged with the open end of the collar 30x, by the resilient force of the resilient cylindrical member 20x after the former was engaged with the latter.

With the tyre valve 1 and tyre sensor 2 being assembled to be in the state as shown in FIG.20, the tyre valve unit U is formed. Then, one end of the tyre valve unit U at the cap 3's side thereof is passed through the hole Rh of the rim R, and the resilient cylindrical member 20x is pulled toward the cap 3. When the first engaging portion 21 of the resilient cylindrical member 20x gets over the hole Rh of the rim R, the resilient cylindrical member 20x is secured to the rim R, between the first engaging portion 21 and the second engaging portion 22. In this case, as the annular space S1 has been defined between the inner surface of the resilient cylindrical member 20x and the extended portion 48, a portion between the first engaging portion 21 and the second engaging portion 22 will be bent in the radial direction (toward the center of the axis), when the first engaging portion 21 of the resilient cylindrical member 20x gets over the hole Rh of the rim R, whereby the resilient cylindrical member 20x can be easily secured to the rim R. Then, if the resilient cylindrical member 20x is pulled further, the second engaging portion 22 is blocked by the rim R, so that it will not get over the rim R, and therefore the tyre valve unit U will be held in the state secured on the rim R. As a result, the tyre valve unit U is held in such a state that the housing 40x is approximately in parallel with the inner surface of the rim R, with a small clearance being provided between them. With respect to the function and effect achieved after it was installed, such as the manner for obtaining the sealing property with the annular space S1, the explanation is omitted herein, because they are the same as those as described with reference to FIGS.1-7.

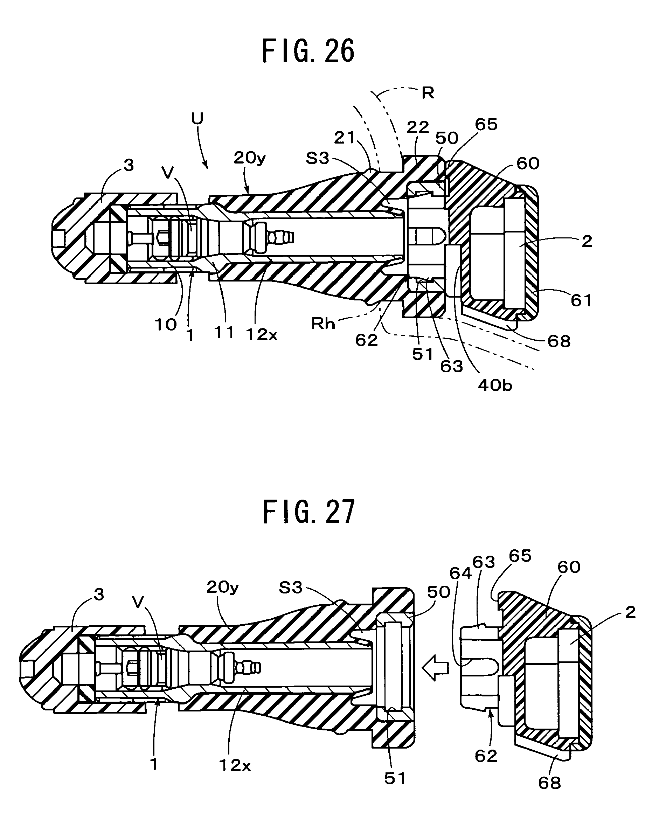

FIGS.26-31 show a further embodiment of the present invention, wherein a collar 50 serving as the rigid annular member corresponds to the collar 30x as described before, and wherein an annular groove 51 is formed on the inner surface of the collar 50, so that an extended portion 62 of a housing 60 is engaged with the annular groove 51. In other words, according to the present embodiment, the collar 50 is different in shape from the collar 30x as shown in FIGS.20-22, the extended portion 62 is different in shape from the extended portion 48 as shown in FIGS.20-22, and its height (longitudinal length) is approximately equal to the height (longitudinal length) of the collar 50. Therefore, the housing 60 (tyre sensor 2) is assembled with the tyre valve 1 in such a state as shown in FIG.26, whereby the total longitudinal length can be reduced.

Also, according to the present embodiment, an annular space S3 is defined between the inner surface of a resilient cylindrical member 20y and the outer surface of the valve stem 12x at such a position that corresponds to the position between the first engaging portion 21 and the second engaging portion 22 of the resilient cylindrical member 20y. As shown in FIG.27, the collar 50 and the valve stem 12x are integrally formed together by insert-forming, or vulcanized, to form the resilient cylindrical member 20y made of rubber. According to the present embodiment, however, the collar 50 is made larger in its inner diameter than that disclosed in FIG.20 and FIG.21, and the annular space S3 opens to the outside space without being blocked by the collar 50. Therefore, a forming die used for the insert-forming can be made easily, so that a relatively inexpensive product can be produced. As other elements are substantially the same as those shown in the embodiment as illustrated in FIGS.20-25, explanation of those elements is omitted herein.

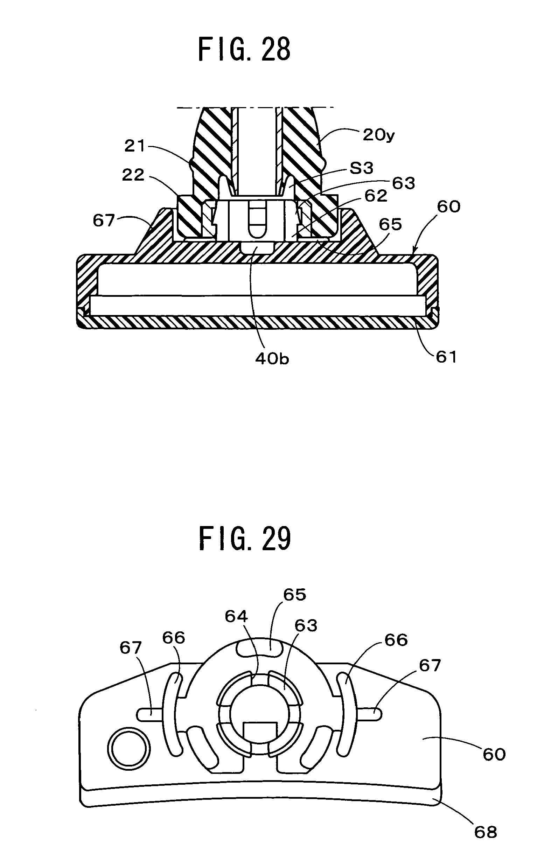

Next will be explained assembling the tyre valve unit U as shown in FIG.26. The housing 60 (tyre sensor 2) as constituted in FIGS.28-31 is inserted into the tyre valve 1 formed integrally with the resilient cylindrical member 20y and the collar 50, as indicated by a blank arrow in FIG.27. As a result, a fork portion 63 of the extended portion 62 is engaged with the annular groove 51. In this case, the extended portion 62 is formed with a plurality of slits 64. When the fork portion 63 is engaged with the annular groove 51 of the collar 50, it is bent in the radial direction (toward the center of the axis), to be easily engaged with the annular groove 51, and held in the state as shown in FIGS.26 and 28. In addition, the protrusion 65 presses the end surface of the resilient cylindrical member 20y, so that the extended portion 62 is engaged with the collar 50, with the resilient cylindrical member 20y being compressed. Therefore, the fork portion 63 is held to be securely engaged with the annular groove 51 of the collar 50, by the resilient force of the resilient cylindrical member 20y after the former was engaged with the latter.

According to the present embodiment, therefore, when the tyre valve 1 is assembled with the tyre sensor 2, the tyre valve unit U as shown in FIG.26 is constituted. Then, one end of the tyre valve unit U at the cap 3's side thereof is passed through the hole Rh of the rim R, and the resilient cylindrical member 20y is pulled toward the cap 3, whereby the tyre valve unit U is secured to the rim R. In this case, as the annular space S3 has been defined between the inner surface of the resilient cylindrical member 20y and the outer surface of the valve stem 12x, a portion between the first engaging portion 21 and the second engaging portion 22 will be bent in the radial direction (toward the center of the axis), when the first engaging portion 21 of the resilient cylindrical member 20y gets over the hole Rh of the rim R, whereby the resilient cylindrical member 20y can be easily secured to the rim R. As a result, the tyre valve unit U is held in such a state that the housing 60 is approximately in parallel with the inner surface of the rim R, with a small clearance being provided between them, as shown in FIG.26.

According to the present embodiment, a pair of lifted wall potions 66 and 66 are formed at opposite lateral sides of the extended portion 62, with ribs 67 and 67 integrally formed therewith, respectively. Also, a guide portion 68 is formed on the outer surface of housing 60, which faces the inner surface of the rim R, so that the clearance between the guide portion 68 and the rim R can be minimized. Therefore, even if the housing 60 is forced to contact the rim R when the vehicle is running, a stably mounted state can be obtained. With respect to the function and effect achieved after it was installed, such as the manner for obtaining the sealing property with the annular space S3, the explanation is omitted herein, because they are the same as those as described with reference to FIGS.1-7.

## Claims

1. A tyre valve unit for mounting on a wheel rim (R) for a vehicle, comprising:
a tyre valve (1) having a valve body (10) and a rigid cylindrical member (12, 12x) extended from the valve body(10);
a tyre sensor (2) accommodated in a housing (40, 40x, 60) having an extended portion (42, 48, 62) with a passage (40a) defined therein, the extended portion (42, 48, 62) positioned in series with the rigid cylindrical member (12, 12x);
a resilient cylindrical member (20, 20x, 20y) configured to accommodate the rigid cylindrical member (12, 12x), and formed with a first engaging portion (21) and a second engaging portion (22) on an outer surface of the resilient cylindrical member (20, 20x, 20y), the first engaging portion (21) and the second engaging portion (22) provided to extend in a radial direction of the resilient cylindrical member (20, 20x, 20y), respectively, such that when the tyre valve unbit is mounted on a wheel rim (R) the rim (R) is held between the first engaging portion (21) and the second engaging portion (22); and
a rigid annular member (30, 30x, 50) secured to an open end of the resilient cylindrical member (20, 20x, 20y), the extended portion (42, 48, 62) of the housing (40, 40x, 60) being engaged with the rigid annular member (30, 30x, 50) in the resilient cylindrical member (20, 20x, 20y), such that an annular space (S1, S3) is defined between the extended portion (42, 48, 62) of the housing (40, 40x, 60) and an inner surface of the resilient cylindrical member (20, 20x, 20y) approximately corresponding to the outer surface of the resilient cylindrical member (20, 20x, 20y) between the first engaging portion (21) and the second engaging portion (22), and that the annular space (S1, S3) communicates with outside of the housing (40, 40x, 60) through the passage (40a) of the extended portion (42, 48, 62).

2. A tyre valve unit as set forth in claim 1, wherein the extended portion (42) of the housing (40) comprises a threaded portion (43) configured to be threaded with the rigid annular member (30) in the resilient cylindrical member (20), and a free end portion (44) provided to extend from the threaded portion (43) into the resilient cylindrical member (20), the passage (40a) being defined in the threaded portion (43) and the free end portion (44) to communicate the annular space (S1) with outside of the housing (40).

3. A tyre valve unit as set forth in claim 2, wherein the rigid cylindrical member (12) is configured to form an enlarged diameter portion (13) enlarged in a radial direction thereof, such that the free end portion (44) of the housing (40) is accommodated in the enlarged diameter portion (13) of the rigid cylindrical member (12), and that a cylindrical space (S2) is defined between the outer surface of the free end portion (44) of the housing (40) and an inner surface of the enlarged diameter portion (13) of the rigid cylindrical member (12), the passage (40a) being defined in the threaded portion (43) and the free end portion (44) to communicate the annular space (S1) and the cylindrical space (S2) with outside of the housing (40).

4. A tyre valve unit as set forth in claim 1, wherein the extended portion (42) of the housing (40) comprises a threaded portion (43) configured to be threaded with the rigid annular member (30) in the resilient cylindrical member (20), and wherein a rigid support member (45) is held at one end thereof by the threaded portion (43), such that a free end portion of the rigid support member (45) extends from the threaded portion (43) into the resilient cylindrical member (20), the passage (40a) being defined in the threaded portion (43) and the rigid support member (45) to communicate the annular space (S1) with outside of the housing (40).

5. A tyre valve unit as set forth in claim 4, wherein the rigid cylindrical member (12) is configured to form an end portion enlarged in a radial direction thereof, such that the free end portion of the rigid support member (45) is accommodated in the enlarged diameter portion (13) of the rigid cylindrical member (12), and that a cylindrical space (S2) is defined between the outer surface of the free end portion of the rigid support member (45) and an inner surface of the enlarged diameter portion (13) of the rigid cylindrical member (12), the passage (40a) being defined in the threaded portion (43) and the rigid support member (45) to communicate the annular space (S1) and the cylindrical space (S2) with outside of the housing (40).

6. A tyre valve unit as set forth in claim 4, wherein the rigid support member comprises a metallic tube (45) secured at one end thereof to the threaded portion (43) of the housing (40).

7. A tyre valve unit as set forth in claim 4, wherein the rigid cylindrical member (12) comprises a metallic tube (45x) integrally accommodated in the housing (40), the metallic tube (45x) provided to extend from the threaded portion (43) to the free end portion (44), the passage (40a) being defined in the metallic tube(45x).

8. A tyre valve unit as set forth in claim 1, wherein the extended portion (42) of the housing (40) comprises a threaded portion (43) configured to be threaded with the rigid annular member (30) in the resilient cylindrical member (20), and wherein a rigid support member (45y) is held at one end thereof in the threaded portion (43), and formed at the other one end of the rigid support member (45y) with a flange portion (45yf) held in the housing (40), the passage being defined in the threaded portion (43) and the rigid support member (45y).

9. A tyre valve unit as set forth in claim 1, wherein the extended portion of the housing (40) comprises a rigid support member (45z) having a threaded portion (45zb) configured to be threaded with the rigid annular member (30) in the resilient cylindrical member (20), and having a free end portion (45za) configured to extend from the threaded portion (45zb) into the resilient cylindrical member (20), the passage (40a) being defined in the rigid support member (45z).

10. A tyre valve unit as set forth in claim 9, wherein the rigid support member is a metallic tube (45z) having the threaded portion (45zb) and the free end portion (45za), and wherein the metallic tube (45z) is integrally connected to the housing (40) at the end of the threaded portion (45zb).

11. A tyre valve unit as set forth in claim 1, wherein the resilient cylindrical member (20, 20x, 20y) is made of rubber, and wherein the rigid annular member (30, 30x, 50) is fitted into the open end of the resilient cylindrical member (20, 20x, 20y).

12. A tyre valve unit as set forth in claim 11, wherein the rigid annular member (30) comprises a metallic collar (30) formed therein with threads, and formed at an end thereof with a flange (31) to be in contact with the housing (40).

13. A tyre valve unit as set forth in claim 1, wherein the extended portion (48, 62) of the housing (40x, 60) comprises a fork portion (49, 63) configured to be engaged with the rigid annular member (30x, 50) in the resilient cylindrical member (20x, 20y), and wherein the rim (R) is held between the first engaging portion (21) and the second engaging portion (22) of the resilient cylindrical member (20x, 20y), with the fork portion (49, 63) being engaged with the rigid annular member (30x, 50) in the resilient cylindrical member (20x, 20y).

14. A tyre valve unit as set forth in claim 13, wherein the resilient cylindrical member (20x, 20y) is made of rubber, and wherein the rigid annular member (30x, 50) is integrally secured to the open end of the resilient cylindrical member (20x, 20y).

15. A tyre valve unit as set forth in claim 14, wherein the housing (40x, 60) comprises a protrusion (40p, 65) placed to be in contact with the open end of the resilient cylindrical member (20x, 20y), with the fork portion (49, 63) being engaged with the rigid annular member (30x, 50) in the resilient cylindrical member (20x, 20y), and wherein the engaging state of the fork portion (49, 63) with the rigid annular member (30x, 50) is held by resilient force of the resilient cylindrical member (20x, 20y), which is produced in response to pressing force of the protrusion (40p, 65) against the resilient cylindrical member (20x, 20y), the pressing force being produced when the fork portion (49, 63) is engaged with the rigid annular member (30x, 50).

16. A tyre valve unit as set forth in claim 13, wherein the annular space (S1) is defined between the fork portion (49) and the inner surface of the resilient cylindrical member (20x) approximately corresponding to the outer surface of the resilient cylindrical member (20x) between the first engaging portion (21) and the second engaging portion (22) of the resilient cylindrical member (20x).

17. A tyre valve unit as set forth in claim 13, wherein the rigid annular member (50) is formed on the inner surface thereof with an annular groove (51), with which the fork portion (63) is engaged.

18. A tyre valve unit as set forth in claim 17, wherein the annular space (S3) is defined between the inner surface of the resilient cylindrical member (20y) and the outer surface of the end portion of the rigid cylindrical member (12x) approximately corresponding to the outer surface of the resilient cylindrical member (20y) between the first engaging portion (21) and the second engaging portion (22) of the resilient cylindrical member (20y).

19. A tyre valve unit as set forth in claim 18, wherein the fork portion (63) is formed along a longitudinal axis thereof with a plurality of slits, to provide a plurality of divided parts.

20. A tyre valve unit as set forth in claim 13, wherein the housing (40x, 60) has an outer side surface placed in parallel with an inner side surface of the rim (R), and wherein the housing (40x, 60) comprises a guide portion (40t, 68) for providing a clearance between the rim (R) and the housing (40x, 60) to be of a constant value.
